# EUROPÄISCHE PATENTSCHRIFT

(11) **EP 3 124 188 B1**
(45) Veröffentlichungstag und Bekanntmachung des Hinweises auf die Patenterteilung: **29.11.2017**
(21) Anmeldenummer: 15179052.4
(22) Anmeldetag: 30.07.2015
(51) Int. Cl.: B26D 1/18, B26D 1/60, B26D 7/06

(54) **SCHNEIDVORRICHTUNG**
CUTTING DEVICE
DISPOSITIF DE COUPE

(43) Veröffentlichungstag der Anmeldung: 01.02.2017
(73) Patentinhaber: Magna Steyr Fuel Systems GesmbH, 8261 Sinabelkirchen (AT)
(72) Erfinder: DREBES, Mario, 10249 Berlin (DE); SPARY, Bernhard, 8302 Nestelbach bei Graz (AT)
(74) Vertreter: Zangger, Bernd

(56) Entgegenhaltungen:
- WO-A1-94/27793
- AU-A- 8 477 075
- FR-A3- 2 684 978

## Beschreibung

### Gebiet der Erfindung

Die vorliegende Erfindung betrifft eine Schneidvorrichtung zum Abschneiden von Stücken von einem Band und eine Vorrichtung zum Herstellen von Kunststoffstücken.

### Stand der Technik

Die hier beschriebene Schneidvorrichtung eignet sich insbesondere für das Abschneiden von einzelnen Stücken von einem Band wie einem Endlosband, welches auf einem Förderband transportiert wird. Derartige Schneidvorrichtungen können in der Papier-, Textil und in der Kunststoffindustrie angewendet werden. Besonders geeignet ist die vorliegende Erfindung für das Abschneiden von einzelnen Platten von einem extrudierten, heißen Kunststoffband, welches mittels Förderband von einer Düse eines Extruders abgezogen wird.

Das Dokument WO 94/27793 A1 beschreibt beispielsweise eine Schneidvorrichtung für Wollbahnen sowie ein Verfahren zum Schneiden von Wollbahnen. Die Schneidvorrichtung ist zum Schneiden der Wollbahnen quer in Bezug auf ihre Förderrichtung vorgesehen und umfasst einen Ständer, eine Fördereinheit für die Wollbahn sowie eine Brücke mit einer darauf verschiebbar gelagerten Schneideinheit.

Das Dokument AU84770 75 A beschreibt beispielsweise eine Schneidanordnung zum Trennen einer Außenhaut eines Sandwichbauteils.

### Zusammenfassung der Erfindung

Es ist eine Aufgabe der Erfindung, eine Schneidvorrichtung und eine Vorrichtung zum Herstellen von Kunststoffstücken umfassend eine solche Schneidvorrichtung anzugeben, die ein flexibles und sicheres Schneiden von Stücken aus einem geförderten Band ermöglicht.

Die Lösung der Aufgabe erfolgt durch eine Schneidvorrichtung zum Abschneiden von Stücken von einem Band mit den Merkmalen gemäß Anspruch 1. Die Schneidvorrichtung umfasst eine Schneideeinheit, eine Fördereinheit zum Fördern des Bandes in einer Längsrichtung, und eine Führungseinheit mit einem Aktuator, wobei die Schneideeinheit mittels der Führungseinheit in Längsrichtung und mittels des Aktuators auf der Führungseinheit in einer normal auf die Längsrichtung stehenden Querrichtung führbar ist, wobei die Schneideeinheit eine drehbar gelagerte Scheibenklinge umfasst, die durch einen Antrieb zum Schneiden in Rotation versetzt werden kann, wobei die Führungseinheit einen Kettenschlitten umfasst und eine nicht mit dem Kettenschlitten bewegliche Grundplatte, wobei der Kettenschlitten eine zwischen zwei Kettenrädern eingespannte Kette umfasst, wobei die Kette an einer ersten Position an der Grundplatte der Führungseinheit fixiert ist.

Erfindungsgemäß kann ein Band von einer Fördereinheit, beispielsweise einem Förderband, in einer Längsrichtung gefördert werden. Eine Schneideeinheit kann ebenfalls in derselben Längsrichtung bewegt werden und so, beispielsweise mit derselben Geschwindigkeit der Fördereinheit, über dem Band geführt werden, so dass die Schneideeinheit streckenweise über derselben Position des Bandes ruhen würde. Zusätzlich kann die Schneideeinheit in einer Querrichtung, also üblicherweise entlang der Breite des Bandes, über das Band geführt werden, so dass bei einer synchronisierten Geschwindigkeit der Fördereinheit und der Führungseinheit ein gerader Schnitt entlang des laufenden Bandes erzeugt werden kann oder eine vordefinierte gekrümmte Schnittlinie. Die Schneideeinheit verfügt zum Schneiden über eine rotierende Scheibenklinge, also ein scheibenförmiges Element mit einer am Umfang der Scheibe ausgebildeten Schneidekante, um eine optimale Trennung des Bandmaterials, insbesondere eines heißen, extrudierten Kunststoffes zu ermöglichen.

Eine erfindungsgemäße Vorrichtung zum Herstellen von Kunststoffstücken kann zumindest einen Extruder mit einer Düse umfassen und zumindest eine erfindungsgemäße Schneidvorrichtung, wobei die Schneidvorrichtung dazu eingerichtet ist, dass ein durch die Düse abgegebenes extrudiertes Kunststoffband mittels der Fördereinheit zur Schneideeinheit gefördert werden kann.

Entsprechend der vorliegenden Erfindung umfasst die Führungseinheit einen Kettenschlitten und eine nicht mit dem Kettenschlitten bewegliche Grundplatte, wobei der Kettenschlitten eine zwischen zwei Kettenrädern eingespannte Kette umfasst, wobei die Kette an einer ersten Position an der Grundplatte der Führungseinheit fixiert ist. Der Begriff "Kette" umfasst dabei Ketten von beliebiger Art und umfasst auch kettenähnliche Mittel wie etwa Riemen.

Erfindungsgemäß umfasst die Schneideeinheit einen Klingenschlitten zur Aufnahme der Scheibenklinge, wobei der Klingenschlitten entlang eines Führungsprofils der Führungseinheit in Querrichtung bewegbar ist.

Erfindungsgemäß ist der Klingenschlitten an einer zweiten Position an der Kette fixiert, wobei die zweite Position auf dem der ersten Position gegenüberliegenden Strang der Kette angeordnet ist, so dass die zweite Position beiderseits durch Kettenräder von der ersten Position getrennt ist.

Erfindungsgemäß ist der Kettenschlitten durch den Aktuator auf der Führungseinheit in Querrichtung bewegbar.

Das Führungsprofil ist bevorzugt an dem Kettenschlitten fixiert, kann aber auch an der Grundplatte fixiert sein.

Vorzugsweise ist die Führungseinheit um eine normal auf das Band stehende, also in der Regel vertikale Achse drehbar aufgehängt.

Besonders bevorzugt umfasst die Schneidvorrichtung eine Steuereinheit, so dass die Geschwindigkeit der Fördereinheit und/oder die Bewegung der Schneideeinheit in Längsrichtung und/oder in Querrichtung und/oder eine Drehung der Führungseinheit um eine normal auf das Band stehende, vertikale Achse, durch die Steuereinheit vorgebbar ist.

Der Antrieb der Scheibenklinge kann bevorzugt durch eine Zahnstange und ein in der Zahnstange kämmendes und mit der Scheibenklinge drehfestes Zahnrad gebildet werden. Die Drehbewegung der Klinge kann dann ohne eigenen Antrieb durch die lineare Bewegung der Schneideinheit erreicht werden. Die Zahnstange ist dazu bevorzugt gegenüber der Führungseinheit fixiert, insbesondere gegenüber der Grundplatte der Führungseinheit.

Der Antrieb der Scheibenklinge kann auch durch einen die Scheibenklinge direkt antreibenden Motor ausgeführt sein.

Bevorzugt weist die Schneideeinheit einen Schuh auf, mit einer der Scheibenklinge gegenüberliegenden Schneidekante.

Vorzugsweise kann die Scheibenklinge mittels einer Anpressfeder in Richtung zur Schneidekante des Schuhs vorgespannt werden.

Die Schneideeinheit, gegebenenfalls insbesondere der Schuh der Schneideeinheit, kann mindestens eine, bevorzugt zwei oder mehr, Luftdüsen aufweisen, um das Band von der Fördereinheit abzulösen.

Bevorzugt ist die Scheibenklinge in Querrichtung ausgerichtet und/oder in Querrichtung ausrichtbar und/oder ein vertikaler Anstellwinkel (Gehrungswinkel) der Scheibenklinge gegenüber der Fördereinheit einstellbar.

Die Scheibenklinge ist bevorzugt rund, gewellt oder gezahnt ausgeführt und/oder weist Sägezähne auf und/oder ist rotationssymmetrisch ausgeführt und/oder weist die Form eines Polygons, insbesondere eines regulären Polygons, beispielsweise sechseckig oder achteckig, auf.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Schneidvorrichtung von der Seite.
- Fig. 2: ist eine schematische Darstellung einer erfindungsgemäßen Schneidvorrichtung von oben.
- Fig. 3: ist eine schematische Darstellung eines Kettenschlittens und eines Klingenschlittens einer erfindungsgemäßen Schneidvorrichtung.
- Fig. 4: ist eine dreidimensionale Darstellung eines Teils einer erfindungsgemäßen Schneidvorrichtung.
- Fig. 5: ist eine dreidimensionale Darstellung eines Teils einer erfindungsgemäßen Schneidvorrichtung.
- Fig. 6: ist eine dreidimensionale Darstellung eines Teils einer erfindungsgemäßen Schneidvorrichtung.
- Fig. 7: ist eine dreidimensionale Darstellung eines Teils einer erfindungsgemäßen Schneidvorrichtung, wobei die Schneideeinheit 2 geschnitten dargestellt ist.
- Fig. 8: zeigt vier mögliche Scheibenklingen für eine erfindungsgemäße Schneidvorrichtung.

### Detaillierte Beschreibung der Erfindung

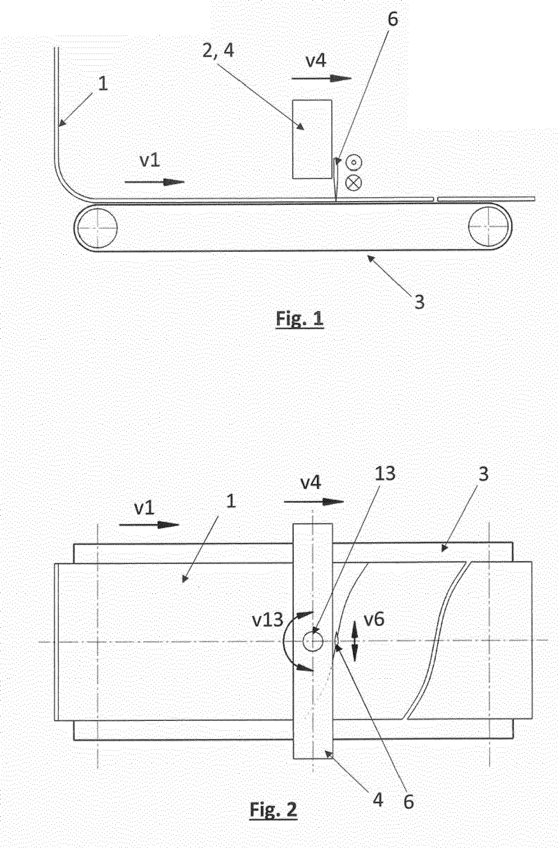

Fig.1 und Fig. 2 zeigen eine schematische Anordnung einer erfindungsgemäßen Schneidvorrichtung während eines Schneidevorganges.

Die Schneidvorrichtung dient zum Abschneiden von Stücken von einem Band 1 und umfasst eine Schneideeinheit 2, eine Fördereinheit 3 zum Fördern des Bandes 1 in einer Längsrichtung, und eine Führungseinheit 4, wobei die Schneideeinheit 2 mittels der Führungseinheit 4 in Längsrichtung (entlang v4) und auf der Führungseinheit 4 in einer normal auf die Längsrichtung stehenden Querrichtung (entlang v6) führbar ist.

Die Bandgeschwindigkeit v1 des Bandes 1 und die Geschwindigkeit v4 der Führungseinheit 4 können beispielsweise mittels einer Steuereinheit miteinander gekoppelt sein, in der einfachsten Form sind sie gleichgesetzt, d.h. synchronisiert.

Fig. 2 zeigt eine Draufsicht der Anordnung von Fig. 1. Die Vorrichtung ist um eine vertikale Achse 13 gesteuert drehbar aufgehängt. Das Band 1 kann entlang der gesamten Vorrichtung mittels Fördereinheit 3 entlanggeführt werden. Die Scheibenklinge 6 kann entlang der Vorrichtung, ebenso durch eine Steuereinheit kontrolliert, bewegt werden. Wenn man die drei Bewegungen der Vorrichtung, nämlich v4 (Geschwindigkeit der Führungseinheit 4 in Längsrichtung), v6 (Geschwindigkeit der Scheibenklinge 6 in Querrichtung) und v13 (Winkelgeschwindigkeit der Führungseinheit 4 um die normale Achse 13) mit der Geschwindigkeit des Bandes v1 abgestimmt steuert, kann eine gewünschte gekrümmte Schnittlinie erhalten werden.

Wenn die Geschwindigkeit der Vorrichtung gerade der Geschwindigkeit der Führungseinheit 4 entspricht, also v13 = 0 und v4 = v1, dann erhält man einen graden Schnitt in Querrichtung. Die Geschwindigkeiten für sonstige Kurven können berechnet werden und durch eine Steuereinheit umgesetzt werden.

Es wäre möglich v4 und v13 mit jeweils eigenem Antrieb darzustellen, bevorzugt werden diese zwei Bewegungen allerdings mit einem gemeinsamen Antrieb erzeugt.

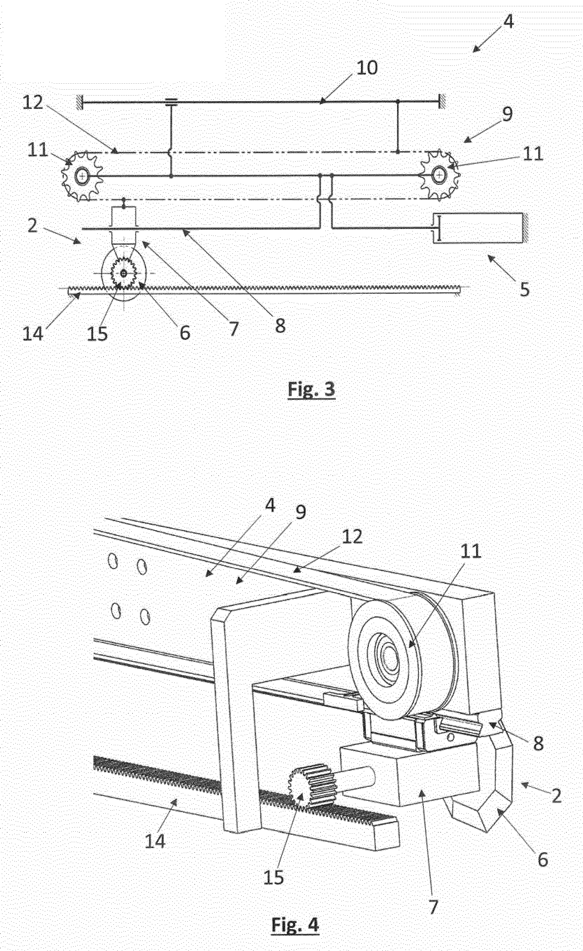

Fig. 3 zeigt den prinzipiellen Aufbau der Schneidevorrichtung, insbesondere die Führung des Kettenschlittens 9 und des Klingenschlittens 7. Die Kettenräder 11 mit der Kette 12 sind auf dem Kettenschlitten 9 montiert. Dieser wird von einem Aktuator 5 bewegt. Die Kette 12 oben ist zur Grundplatte 10 fixiert. Der Klingenschlitten 7 mit der Scheibenklinge 6 ist mit der Kette 12 unten verbunden und läuft auf einem Führungsprofil 8, welches zum Kettenschlitten 9 gebunden ist (das Führungsprofil 8 könnte auch zur Grundplatte 10 gebunden sein). Wenn der Aktuator 5 betätigt wird, läuft die Scheibenklinge 6 mit doppelter Geschwindigkeit und hinterlegt daher auch den doppelten Weg. Dadurch kann man einen Aktuator 5 mit halb so langem Hub verwenden, als ohne Aufbau mit Kettenschlitten 9.

Natürlich könnte man die beiden Schlitten 7 und 9 mit zwei separaten Aktuatoren antreiben (die Kette 12 darf dann nicht zur Grundplatte 10 gebunden sein). Bevorzugt ist jedoch eine Lösung mit einem einzigen Aktuator, wie in Fig. 3 dargestellt.

In Fig. 4 ist die Konstruktion des Klingenschlittens 7 zu sehen. Der Klingenschlitten 7 verwendet eine drehbare Scheibenklinge 6, die durch einen Antrieb zum Schneiden in Rotation versetzt werden kann.

Der Umfang der Scheibenklinge 6 ist als Schneidekante ausgebildet. Diese Art von rotierenden Klingen sind beispielsweise aus der Lebensmittelindustrie ("Pizzaschneider") und der Textilindustrie bekannt. Die rotierende Scheibenklinge ermöglicht ein optimales Anschneiden des Bandmaterials. Da beispielsweise die Oberfläche eines extrudierten Bandes mit der Umgebungsluft durch Abkühlen eine semi-solide Haut ausbildet, ist die rotierende Scheibenklinge 6 beim Anschnitt vorteilhaft.

Die rotierende Scheibenklinge 6 kann von einem Motor direkt angetrieben werden, bevorzugt wird sie aber wie in Fig. 3 bis Fig. 7 dargestellt, mit einem Zahnrad 15, welches auf einer zum Gestell bzw. zur Grundplatte 10 fixierten Zahnstange 14 abrollt, angetrieben. Falls die Scheibenklinge 6 direkt angetrieben wird, entfallen Zahnrad 15 und Zahnstange 14; dafür muss jedoch ein Antriebsmotor angebaut werden. Dieser läuft mit der Führungseinheit 4 mit, die elektrische oder pneumatische Energiezuführung muss ebenso mitlaufen. Daher wird die Lösung mit Zahnrad 15 und Zahnstange 14 bevorzugt. Die Größe des Zahnrades 15 bestimmt die Drehzahl der Scheibenklinge 6. Der verfügbare Raum oberhalb des Bandes 1 und der Durchmesser der verwendeten Welle grenzt die Größe des Zahnrades 15 ein.

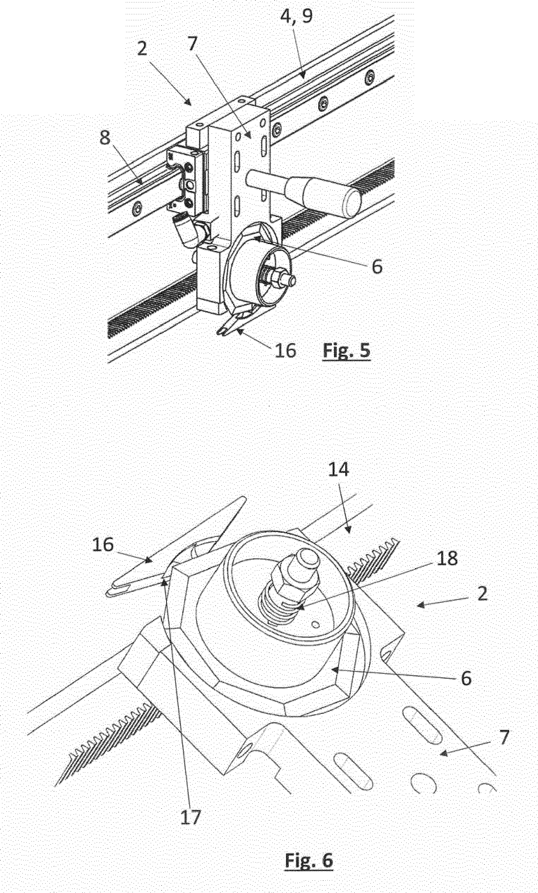

Der Schuh 16 (s. Fig. 5 und Fig. 6) kann unterhalb der rotierenden Scheibenklinge 6 angeordnet werden, um das Ausweichen des Bandes 1 zu verhindern.

Fig. 6 zeigt eine 3D Darstellung der Schneideeinheit 2. Die Klinge 6 kann durch eine Anpressfeder 18 gegen die Wand einer Ausnehmung im Schuh 16 gepresst werden. Die Ausnehmung hat eine scharfe Kante, welche als zweite Schneidekante 17 funktioniert. Dadurch wird das Material des Bandes 1 nicht nur mittels Druck, sondern durch das Prinzip einer Schere getrennt. Deshalb ist auch eine Anordnung mit Schuh 16 bevorzugt. Natürlich sind alle diese Elemente, insbesondere die beiden Schneidkanten, gehärtet. Gegen ein Ankleben an der Fördereinheit 3 können die Teile, welche mit dem Bandmaterial 1 in Berührung kommen, antihaftbeschichtet sein.

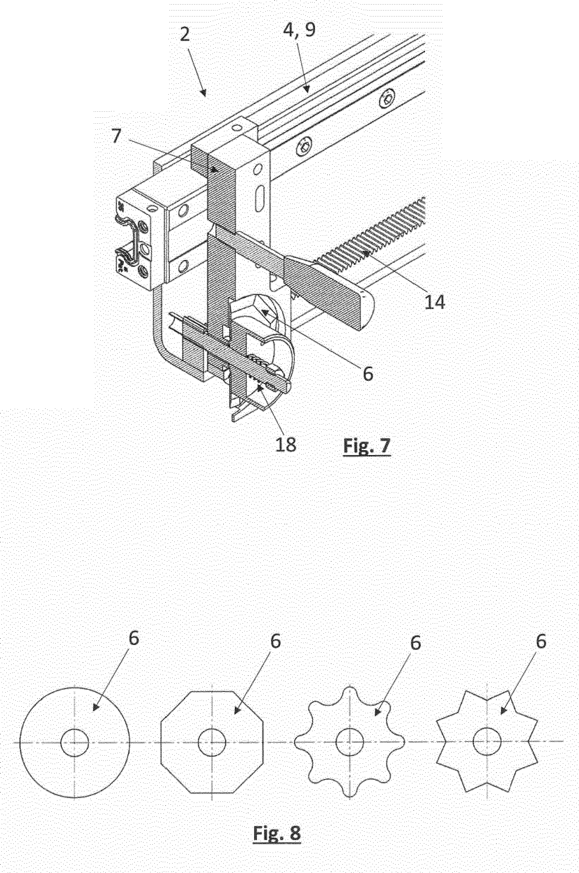

Fig. 7 zeigt einen Schnitt durch die Schneideeinheit 2.

Fig. 8 zeigt eine Auswahl von verschiedenen möglichen Formen der Scheibenklinge 6, nämlich kreisrund, Polygon - hier achteckig, gewellt und gezahnt, bzw. sternförmig, jeweils in einer symmetrischen Ausführung. Hier nicht illustriert aber ebenso möglich wären gewellte oder gezahnte Profile die asymmetrisch ausgeführt sind, beispielsweise asymmetrische Sägezähne.

Für das Schneiden in Vor- und Rücklaufrichtung ist nur die Verwendung einer symmetrischen Ausführung einer Scheibenklinge 6 sinnvoll.

Eine wellige oder verzahnte Ausführung der Scheibenklinge 6 sind vorteilhaft beim Anschneiden eines Bandes 1. Die Zähne "ziehen" das Material zu den Schneidekanten, daher ist ein Ausknicken des Bandes 1 in diesem Fall unwahrscheinlicher. Kreisrunde und polygonförmige Scheibenklingen 6 erlauben eine einfachere Nachschärfung der jeweiligen Schneidkante.

### Bezugszeichenliste

- 1: Band
- 2: Schneideeinheit
- 3: Fördereinheit
- 4: Führungseinheit
- 5: Aktuator
- 6: Scheibenklinge
- 7: Klingenschlitten
- 8: Führungsprofil
- 9: Kettenschlitten
- 10: Grundplatte
- 11: Kettenrad
- 12: Kette
- 13: normal auf die Fördereinheit stehende Achse
- 14: Zahnstange
- 15: mit der Scheibenklinge drehfestes Zahnrad
- 16: Schuh
- 17: Schneidekante
- 18: Anpressfeder

- v1: Geschwindigkeit des Bandes (Längsrichtung)
- v4: Geschwindigkeit der Führungseinheit (Längsrichtung)
- v6: Geschwindigkeit der Scheibenklinge (Querrichtung)
- v13: Winkelgeschwindigkeit der Führungseinheit um Achse

## Patentansprüche

1. Schneidvorrichtung zum Abschneiden von Stücken von einem Band (1), umfassend eine Schneideeinheit (2), eine Fördereinheit (3) zum Fördern des Bandes (1) in einer Längsrichtung, und eine Führungseinheit (4) mit einem Aktuator (5), wobei die Schneideeinheit (2) mittels der Führungseinheit (4) in Längsrichtung (v4) und mittels des Aktuators (5) auf der Führungseinheit (4) in einer normal auf die Längsrichtung (v4) stehenden Querrichtung (v6) führbar ist, wobei die Schneideeinheit (2) eine drehbar gelagerte Scheibenklinge (6) umfasst, die durch einen Antrieb zum Schneiden in Rotation versetzt werden kann, wobei die Führungseinheit (4) einen Kettenschlitten (9) umfasst und eine Grundplatte (10), wobei der Kettenschlitten (9) relativ zur Grundplatte (10) beweglich ist, wobei der Kettenschlitten (9) eine zwischen zwei Kettenrädern (11) eingespannte Kette (12) umfasst, wobei die Schneideeinheit (2) einen Klingenschlitten (7) zur Aufnahme der Scheibenklinge (6) umfasst, wobei der Klingenschlitten (7) entlang eines Führungsprofils (8) der Führungseinheit (4) in Querrichtung bewegbar ist, **dadurch gekennzeichnet, dass** die Kette (12) an einer ersten Position an der Grundplatte (10) der Führungseinheit (4) fixiert ist, wobei der Klingenschlitten (7) an einer zweiten Position an der Kette (12) fixiert ist, wobei die zweite Position auf dem der ersten Position gegenüberliegenden Strang der Kette (12) angeordnet ist, wobei der Kettenschlitten (9) durch den Aktuator (5) auf der Führungseinheit (4) in Querrichtung bewegbar ist.

2. Schneidvorrichtung nach Anspruch 1,
**dadurch gekennzeichnet, dass** das Führungsprofil (8) an dem Kettenschlitten (9) fixiert ist oder an der Grundplatte (10) fixiert ist.

3. Schneidvorrichtung nach einem der vorhergehenden Ansprüche,
**dadurch gekennzeichnet, dass** die Führungseinheit (4) um eine normal auf die Fördereinheit (3) stehende Achse (13) drehbar aufgehängt ist.

4. Schneidvorrichtung nach einem der vorhergehenden Ansprüche,
**dadurch gekennzeichnet, dass** die Schneidvorrichtung eine Steuereinheit umfasst, so dass die Geschwindigkeit der Fördereinheit (3) und/oder die Bewegung der Schneideeinheit (2) in Längsrichtung und/oder in Querrichtung und/oder eine Drehung der Führungseinheit (4) um eine normal auf das Band stehende Achse (13) durch die Steuereinheit vorgebbar ist.

5. Schneidvorrichtung nach einem der vorhergehenden Ansprüche,
**dadurch gekennzeichnet, dass** der Antrieb der Scheibenklinge (6) durch eine Zahnstange (14) und ein in der Zahnstange (14) kämmendes und mit der Scheibenklinge (6) drehfestes Zahnrad (15) gebildet wird oder durch einen die Scheibenklinge (6) direkt antreibenden Motor.

6. Schneidvorrichtung nach einem der vorhergehenden Ansprüche,
**dadurch gekennzeichnet, dass** die Schneideeinheit (2) einen Schuh (16) aufweist, mit einer der Scheibenklinge (6) gegenüberliegenden Schneidekante (17).

7. Schneidvorrichtung nach Anspruch 6,
**dadurch gekennzeichnet, dass** die Scheibenklinge (6) mittels einer Anpressfeder (18) in Richtung zur Schneidekante (17) des Schuhs (16) vorgespannt werden kann.

8. Schneidvorrichtung nach einem der vorhergehenden Ansprüche,
**dadurch gekennzeichnet, dass** die Schneideeinheit (2), gegebenenfalls insbesondere der Schuh (16) der Schneideeinheit (2), mindestens eine Luftdüse aufweist, um das Band von der Fördereinheit abzulösen.

9. Schneidvorrichtung nach einem der vorhergehenden Ansprüche,
**dadurch gekennzeichnet, dass** die Scheibenklinge (6) in Querrichtung ausgerichtet ist und/oder in Querrichtung ausrichtbar ist und/oder ein vertikaler Anstellwinkel der Scheibenklinge (6) gegenüber der Fördereinheit (3) einstellbar ist.

10. Schneidvorrichtung nach einem der vorhergehenden Ansprüche,
**dadurch gekennzeichnet, dass** die Scheibenklinge (6) rund, gewellt oder gezahnt ausgeführt ist und/oder Sägezähne aufweist und/oder rotationssymmetrisch ausgeführt ist und/oder die Form eines Polygons, insbesondere eines regulären Polygons, aufweist.

11. Vorrichtung zum Herstellen von Kunststoffstücken, umfassend zumindest einen Extruder mit einer Düse und zumindest eine Schneidvorrichtung nach einem der vorhergehenden Ansprüche, wobei die Schneidvorrichtung dazu eingerichtet ist, dass ein durch die Düse abgegebenes extrudiertes Kunststoffband mittels der Fördereinheit (3) zur Schneideeinheit (2) gefördert werden kann.

## Claims

1. Cutting device for cutting off pieces from a strip (1), comprising a cutter unit (2), a conveyor unit (3) for conveying the strip (1) in a longitudinal direction, and a guide unit (4) having an actuator (5), the cutter unit (2) being guidable in the longitudinal direction (v4) by means of the guide unit (4), and guidable in a transverse direction (v6) that is perpendicular to the longitudinal direction (v4) by means of the actuator (5) on the guide unit (4), the cutter unit (2) comprising a rotatably mounted disc blade (6), which can be made to rotate by a drive, for the purpose of cutting, the guide unit (4) comprising a chain carriage (9) and a base plate (10), the chain carriage (9) being movable relative to the base plate (10), the chain carriage (9) comprising a chain (12) between two sprocket wheels (11), the cutter unit (2) comprising a blade carriage (7) for receiving the disc blade (6), the blade carriage (7) being movable in a transverse direction along a guide profile (8) of the guide unit (4), **characterized in that** the chain (12) is fixed to the base plate (10) of the guide unit (4), at a first position,
the blade carriage (7) being fixed to the chain (12), at a second position, the second position being disposed on the strand of the chain (12) that is opposite the first position, the chain carriage (9) being able to be moved in a transverse direction by the actuator (5) on the guide unit (4).

2. Cutting device according to Claim 1,
**characterized in that** guide profile (8) is fixed to the chain carriage (9), or is fixed to the base plate (10).

3. Cutting device according to one of the preceding claims,
**characterized in that** the guide unit (4) is suspended so as to be rotatable about an axis (13) that is perpendicular to the conveyor unit (3).

4. Cutting device according to one of the preceding claims,
**characterized in that** the cutting device comprises a control unit, such that the velocity of the conveyor unit (3) and/or the motion of the cutter unit (2) in the longitudinal direction and/or in the transverse direction, and/or a rotation of the guide unit (4) about a vertical axis (13) that is perpendicular to the strip, can be predefined by the control unit.

5. Cutting device according to one of the preceding claims,
**characterized in that** the drive of the disc blade (6) is constituted by a rack (14) and a pinion (15) that meshes in the rack (14) and that is rotationally solid with the disc blade (6), or by a motor that directly drives the disc blade (6).

6. Cutting device according to one of the preceding claims,
**characterized in that** the cutter unit (2) has a shoe (16), having a cutting edge (17) opposite the disc blade (6).

7. Cutting device according to Claim 6,
**characterized in that** the disc blade (6) can be biased, by means of a contact pressure spring (18), in the direction towards the cutting edge (17) of the shoe (16) .

8. Cutting device according to one of the preceding claims,
**characterized in that** the cutter unit (2), in particular, if appropriate, the shoe (16) of the cutter unit (2), has at least one air nozzle, in order to detach the strip from the conveyor unit.

9. Cutting device according to one of the preceding claims,
**characterized in that** the disc blade (6) is aligned in the transverse direction and/or is alignable in the transverse direction, and/or a vertical pitch angle of the disc blade (6) can be set in respect of the conveyor unit (3).

10. Cutting device according to one of the preceding claims,
**characterized in that** the disc blade (6) is of a round, fluted or toothed design, and/or has saw teeth, and/or is of a rotationally symmetrical design, and/or has the shape of a polygon, in particular a regular polygon.

11. Device for producing plastic pieces, comprising at least one extruder, having a die, and at least one cutting device according to any one of the preceding claims, the cutting device being designed such that an extruded plastic strip that is output through the die can be conveyed to the cutter unit (2) by means of the conveyor unit (3).

## Revendications

1. Dispositif de coupe pour le découpage de pièces d'une bande (1), comprenant une unité de coupe (2), une unité de transport (3) pour le transport de la bande (1) dans une direction longitudinale, et une unité de guidage (4) avec un actionneur (5), dans lequel l'unité de coupe (2) peut être guidée au moyen de l'unité de guidage (4) en direction longitudinale (v4) et au moyen de l'actionneur (5) sur l'unité de guidage (4) dans une direction transversale (v6) orientée normalement à la direction longitudinale (v4), dans lequel l'unité de coupe (2) comprend un disque de coupe (6) monté de façon rotative, qui peut être mis en rotation par un entraînement pour la coupe, dans lequel l'unité de guidage (4) comprend un chariot à chaîne (9) et une plaque de base (10), dans lequel le chariot à chaîne (9) est mobile par rapport à la plaque de base (10), dans lequel le chariot à chaîne (9) comprend une chaîne (12) tendue entre deux roues à chaîne (11), dans lequel l'unité de coupe (2) comprend un chariot porte-lame (7) destiné à recevoir le disque de coupe (6), dans lequel le chariot porte-lame (7) est déplaçable en direction transversale le long d'un profilé de guidage (8) de l'unité de guidage (4), **caractérisé en ce que** la chaîne (12) est fixée dans une première position à la plaque de base (10) de l'unité de guidage (4), dans lequel le chariot à chaîne (7) est fixé dans une deuxième position à la chaîne (12), dans lequel la deuxième position est disposée sur le brin de la chaîne (12) opposé à la première position, dans lequel le chariot à chaîne (9) est déplaçable en direction transversale sur l'unité de guidage (4) au moyen de l'actionneur (5).

2. Dispositif de coupe selon la revendication 1, **caractérisé en ce que** le profilé de guidage (8) est fixé au chariot à chaîne (9) ou est fixé à la plaque de base (10).

3. Dispositif de coupe selon l'une quelconque des revendications précédentes, **caractérisé en ce que** l'unité de guidage (4) est suspendue de façon rotative autour d'un axe (13) orienté normalement à l'unité de transport (3).

4. Dispositif de coupe selon l'une quelconque des revendications précédentes, **caractérisé en ce que** le dispositif de coupe comprend une unité de commande, de telle manière que la vitesse de l'unité de transport (3) et/ou le mouvement de l'unité de coupe (2) en direction longitudinale et/ou en direction transversale et/ou une rotation de l'unité de guidage (4) autour d'un axe (13) orienté normalement à la bande (1) puisse être prédéterminé(e) par l'unité de commande.

5. Dispositif de coupe selon l'une quelconque des revendications précédentes, **caractérisé en ce que** l'entraînement du disque de coupe (6) est formé par une crémaillère (14) et une roue dentée (15) engrenant avec la crémaillère (15) et solidaire en rotation du disque de coupe (6) ou par un moteur entraînant directement le disque de coupe (6).

6. Dispositif de coupe selon l'une quelconque des revendications précédentes, **caractérisé en ce que** l'unité de coupe (2) présente un patin (16), avec une arête de coupe (17) opposée au disque de coupe (6).

7. Dispositif de coupe selon la revendication 6, **caractérisé en ce que** le disque de coupe (6) peut être précontraint au moyen d'un ressort de pression (18) en direction de l'arête de coupe (17) du patin (16).

8. Dispositif de coupe selon l'une quelconque des revendications précédentes, **caractérisé en ce que** l'unité de coupe (2), éventuellement en particulier le patin (16) de l'unité de coupe (2), présente au moins une buse à air, afin de décoller la bande de l'unité de transport.

9. Dispositif de coupe selon l'une quelconque des revendications précédentes, **caractérisé en ce que** le disque de coupe (6) est orienté en direction transversale et/ou peut être orienté en direction transversale et/ou un angle d'attaque vertical du disque de coupe (6) par rapport à l'unité de transport (3) est réglable.

10. Dispositif de coupe selon l'une quelconque des revendications précédentes, **caractérisé en ce que** le disque de coupe (6) est réalisé sous forme ronde, ondulée ou dentée et/ou présente des dents de scie et/ou est réalisé sous forme symétrique en rotation et/ou présente la forme d'un polygone, en particulier d'un polygone régulier.

11. Dispositif de fabrication de pièces en matière plastique, comprenant au moins une extrudeuse avec une buse et au moins un dispositif de coupe selon l'une quelconque des revendications précédentes, dans lequel le dispositif de coupe est conçu de telle manière qu'une bande de matière plastique extrudée délivrée par la buse puisse être transportée au moyen de l'unité de transport (3) jusqu'à l'unité de coupe (2).
